# EUROPEAN PATENT APPLICATION

(11) **EP 4 523 847 A1**
(43) Date of publication of application: **19.03.2025**
(21) Application number: 23196813.2
(22) Date of filing: 12.09.2023
(51) Int. Cl.: B24B 41/00, B24B 41/02, B24B 5/04, B23Q 1/01, B23Q 11/00

(54) **AN APPARATUS FOR PROCESSING A COMPONENT**

(71) Applicant: Grinding Technology S.r.l., 15016 Cassine (AL) (IT)
(72) Inventor: GUAZZO, Andrea Secondo, 15019 Strevi (AL) (IT); REPETTO, Matteo, 15076 Ovada (AL) (IT)
(74) Representative: Scipioni, Luca

(57) **Abstract**

An apparatus (1) for processing a component (C) through one or more operations, comprises: a workpiece holder assembly (10) which includes a locking element (101) configured to keep a grip on the component (C) during processing; a base (12), made from a first material and configured to support the apparatus (1) on a supporting surface; a working unit (11) which includes a slide block (112), made from a second material having a thermal expansion coefficient different from that of the first material and configured to move the working unit (11) relative to the workpiece holder assembly (10) along a longitudinal direction (L) parallel to the longitudinal axis (A).

The apparatus comprises a coupling system (13), configured to allow coupling between the slide block (112) and the base (12). The coupling system (13) includes: a guiding bar (131), elongated along the longitudinal direction (L) and coupled to the slide block (112) which slides therein; a locking element, configured to lock the guiding bar (131) to the base (12) along the longitudinal direction (L) and disposed, along the longitudinal direction (L), between the first and the second end of the guiding bar (131). The first and the second end of the guiding bar (131) are movable along the longitudinal direction (L).

## Description

This invention relates to an apparatus and a method for processing a component through one or more operations. In the field of mechanical processes, in particular high-precision processes, machines known in the prior art include a base, configured to support the machine on a supporting surface, a guide connected to the base, and one or more working units slidable relative to the base to vary the position of a tool relative to the workpiece being processed.

In some prior art technical solutions, the base is made from a first material, which has a first thermal expansion coefficient, and the working unit is made at least partly from a second material, having a second thermal expansion coefficient, different from the first. That means that temperature variations cause the coupling between the base and the working unit to lose its calibration, leading, for example, to undesirable displacement of the working unit relative to the base having a negative impact on the quality of the processes.

The standard of processing performed by prior art machines is therefore unacceptable.

The aim of this disclosure is to provide an apparatus and a method for processing a component to overcome the above mentioned disadvantages of the prior art.

This aim is fully achieved by the apparatus and method of this disclosure as characterized in the appended claims.

According to an aspect of it, this disclosure provides an apparatus for processing a component through one or more operations.

The apparatus comprises a workpiece holder assembly, elongated along a longitudinal axis and including a locking element configured to keep a grip on the component during processing.

The apparatus comprises a base. The base is made from a first material. The base is connected to the workpiece holder assembly. The base is configured to support the apparatus on a supporting surface.

The apparatus comprises a working unit. The working unit includes a working tool. The working tool is configured to come into contact with the component to perform the one or more operations thereon. The working unit comprises a slide block. The slide block is movably connected to the base. The working unit is movable relative to the workpiece holder assembly along a longitudinal direction parallel with the longitudinal axis.

The slide block is made from a second material, having a thermal expansion coefficient different from that of the first material.

Advantageously, the apparatus comprises a (labile) coupling system, configured to allow coupling between the slide block and the base.

The coupling system comprises a guiding bar. The guiding bar is elongated along the longitudinal direction between a first end and a second end. The guiding bar is coupled to the slide block which slides therein.

The coupling system comprises a locking element. The locking element is configured to lock the guiding bar to the base along the longitudinal direction. The locking element is disposed, along the longitudinal direction, between the first and the second end of the guiding bar. In other words, the locking element allows locking the guiding bar at a connecting point which is preferably located at a central position along the longitudinal length of the guiding bar (that is, at the point on the guiding bar equidistant from the first and the second end of the guiding bar).

The first and the second end of the guiding bar are movable (loose or free to move) along the longitudinal direction, so as to be able to deform freely in response to a thermal variation.

This embodiment allows the guiding bar, which acts as an interface between slide block and base, to respond to the thermal variation by deforming along the longitudinal direction without negatively impacting the quality of the process as would, instead, a dimensional variation along a direction perpendicular to the longitudinal direction. In essence, therefore, the (labile) coupling system keeps the centre (or barycentre) of the guiding bar fixed relative to the base but allows the end of the guiding bar to compensate for any deformation difference between base and slide block caused by the same thermal variation.

In an embodiment, the (labile) coupling system comprises a first abutment unit configured to prevent movement of the guiding bar relative to the base along a transverse direction, perpendicular to the longitudinal direction. It should be noted that the first abutment unit may be an element either distinct from the base or defined by a specific structure of the base.

The (labile) coupling system comprises a second abutment unit configured to prevent movement of the guiding bar relative to the base along a vertical direction, perpendicular to the longitudinal direction and to the transverse direction.

This allows stopping the guiding bar along the transverse and vertical directions, where deforming would, if it occurred, reduce the quality of processing. Thus, the only degree of freedom for deforming the guiding bar remains the longitudinal direction.

In an example embodiment, the first abutment unit comprises a reference strip, elongated along the longitudinal direction between a respective first end and second end. The reference strip is made from the first material. The reference strip is locked to the base. The reference strip defines a step on which it abuts the guiding bar, along the transverse direction in a first sense. The presence of the reference strip allows the coupling system to be more flexible and to be adjusted on the base by varying the position of the reference strip.

In an example embodiment, the second abutment unit comprises one or more plugs. The one or more plugs are disposed, along the vertical direction and relative to the reference strip, on the opposite side of the base. In other words, the one or more plugs are disposed above the reference strip to define an abutment along the vertical direction.

In this embodiment, the guiding bar comprises a first transverse protrusion. The plurality of plugs vertically abut the protrusion to prevent the guiding bar from being lifted relative to the base.

Preferably, the first abutment unit comprises one or more abutment wedges. Each abutment wedge includes a respective sloping abutment surface. Each abutment wedge is disposed, relative to the transverse direction, on the opposite side of the reference strip. The guiding bar comprises a second transverse protrusion, disposed on the opposite side of the first transverse protrusion. Preferably, the second transverse protrusion includes a sloping surface. The sloping abutment surfaces of the abutment wedges are in contact with the second transverse protrusion to prevent the guiding bar from moving along the vertical direction and/or along the transverse direction, in a second sense. This embodiment allows maintaining contact with, hence the design position of, the guiding bar at all times, since deformation of the bar along the transverse direction is compensated for by the deformation of the abutment plugs, which bend in a first sense to push when the guiding bar is contracted (bringing it back into contact with the reference strip) and in a second sense (opposite of the first) when the bar expands.

Preferably, the one or more abutment wedges are flexible and configured to bend to compensate for thermal expansion along the transverse direction due to a thermal variation.

In an embodiment, each abutment wedge comprises a respective elastic element configured to keep it in contact with the second transverse protrusion. Alternatively, the wedge itself remains in contact on account of the force of elastic deformation. In some embodiments, the one or more wedges might also be pre-loaded in order to exert a higher elastic return force.

In an embodiment, the one or more abutment wedges act as leaf springs.

In an example embodiment, the locking element is a pin, configured to lock the guiding bar to the base. Preferably, the locking element is disposed at a longitudinal position equidistant from the first and the second end of the guiding bar. This ensures that the two ends of the guiding bar deform uniformly.

In an embodiment, the working unit comprises an additional slide block which is movably connected to the base. In an embodiment, the apparatus comprises an additional coupling system, configured to allow coupling between the additional slide block and the base.

The additional coupling system includes an additional guiding bar, elongated along the longitudinal direction between a respective first end and a respective second end and coupled to the additional slide block which slides therein.

The additional coupling system includes an additional locking element, configured to lock the additional guiding bar to the base along the longitudinal direction.

The additional locking element is disposed, along the longitudinal direction, between the first and the second end of the additional guiding bar. The first and the second end of the additional guiding bar are movable along the longitudinal direction, so as to be able to deform freely in response to a thermal variation.

The additional coupling system comprises an additional reference strip, configured to transversely abut the additional guiding bar.

In a first embodiment, the reference strip and the additional reference strip are disposed on outer transverse sides of the respective guiding bar. In a second embodiment, the reference strip and the additional reference strip are disposed on inner transverse sides of the respective guiding bar.

In a third embodiment, the reference strip is disposed on an outer transverse side of the respective guiding bar, while the additional reference strip is disposed on an inner transverse side of the respective additional guiding bar, or vice versa.

In an embodiment, the base comprises a groove, in which the guiding bar is disposed. In this embodiment, the first abutment unit is at least partly defined by the groove in the base, which is configured to transversely abut the guiding bar. Basically, the groove has the same function as the reference strip.

The presence of the groove makes it easier to assemble the apparatus but reduces its flexibility with regard to the positioning of the guiding bar.

In an embodiment, the base is made from granite.

According to an aspect of it, this disclosure provides a method for processing a component through one or more operations.

The method includes a step of keeping a grip on the component by means of a workpiece holder assembly which is elongated along a longitudinal axis and includes a locking element.

The method includes a step of supporting the apparatus on a supporting surface by means of a base made from a first material.

The method includes a step of performing the one or more operations by means of a working unit made from a second material having a thermal expansion coefficient different from that of the first material.

The method includes a step of moving the working unit longitudinally along a longitudinal direction parallel with the longitudinal axis.

The method includes a step of moving the working unit transversely along a transverse direction perpendicular to the longitudinal axis.

In the step of moving longitudinally and/or in the step of moving transversely, the slide block is coupled to the base by a coupling system according to one or more of the features described in this disclosure.

The method comprises a step of locking the guiding bar along the longitudinal direction by means of a locking element of the coupling system. The method comprises a step of the first and the second end thermally expanding freely along the longitudinal direction in response to a thermal variation.

The method comprises a step of abutting transversely, in which a first abutment unit prevents movement of the guiding bar relative to the base along the transverse direction.

The method comprises a step of abutting vertically, in which a second abutment unit prevents movement of the guiding bar relative to the base along the vertical direction, perpendicular to the longitudinal direction and to the transverse direction.

Preferably, in the step of abutting transversely, a reference strip, locked to the base, elongated along the longitudinal direction between a respective first and second end and made from the first material, defines a step which abuts the guiding bar along the transverse direction in a first sense.

According to an aspect of it, this disclosure also provides a method for making an apparatus for processing a component. The method comprises a step of providing a base made from a first material. The method comprises a step of positioning a workpiece holder assembly, elongated along a longitudinal axis and including a locking element for keeping a grip on the component during processing.

The method comprises a step of positioning a (labile) coupling system on the base.

The step of (labile) coupling comprises a step of providing a guiding bar, elongated along the longitudinal direction between a first end and a second end.

The step of coupling comprises a step of positioning a first abutment unit. The step of coupling comprises a step of positioning the guiding bar in contact with the first abutment unit along a transverse direction, perpendicular to the longitudinal axis.

The step of coupling comprises a step of positioning a second abutment unit to abut the guiding bar along a vertical direction, perpendicular to the transverse direction and to the longitudinal axis. The step of coupling comprises a step of locking the guiding bar to the base along a longitudinal direction, parallel with the longitudinal axis, by means of a locking element. The locking element is disposed, along the longitudinal direction, between the first and the second end of the guiding bar. The first and the second end of the guiding bar are movable along the longitudinal direction, so as to be able to deform freely in response to a thermal variation.

The step of coupling comprises a step of coupling a slide block of a working unit, which is configured to perform operations on a component, to the guiding bar in such a way as to allow movement of the working unit along the longitudinal direction.

This and other features will become more apparent from the following description of a preferred embodiment, illustrated purely by way of nonlimiting example in the accompanying drawings, in which:

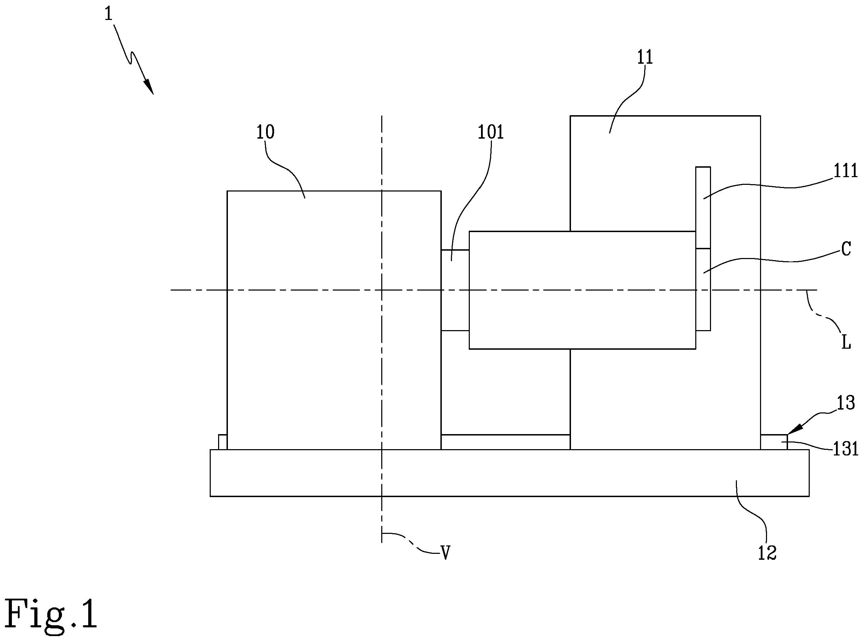

- Figure 1 shows a schematic side view of an apparatus for performing mechanical processes on a component;

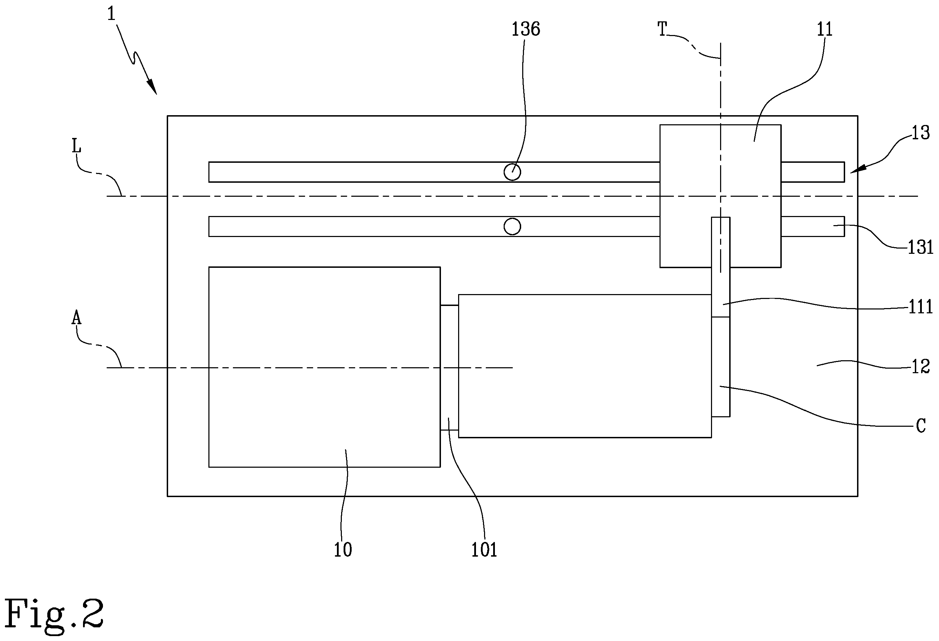

- Figure 2 shows a schematic plan view of the apparatus of Figure 1;

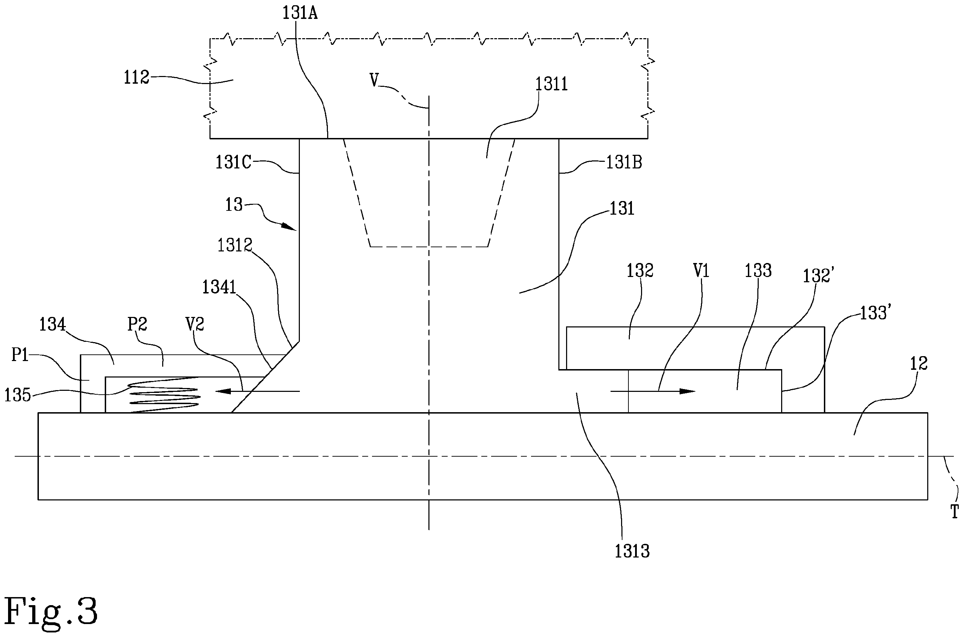

- Figure 3 schematically illustrates a first embodiment of a coupling system of the apparatus of Figure 1;

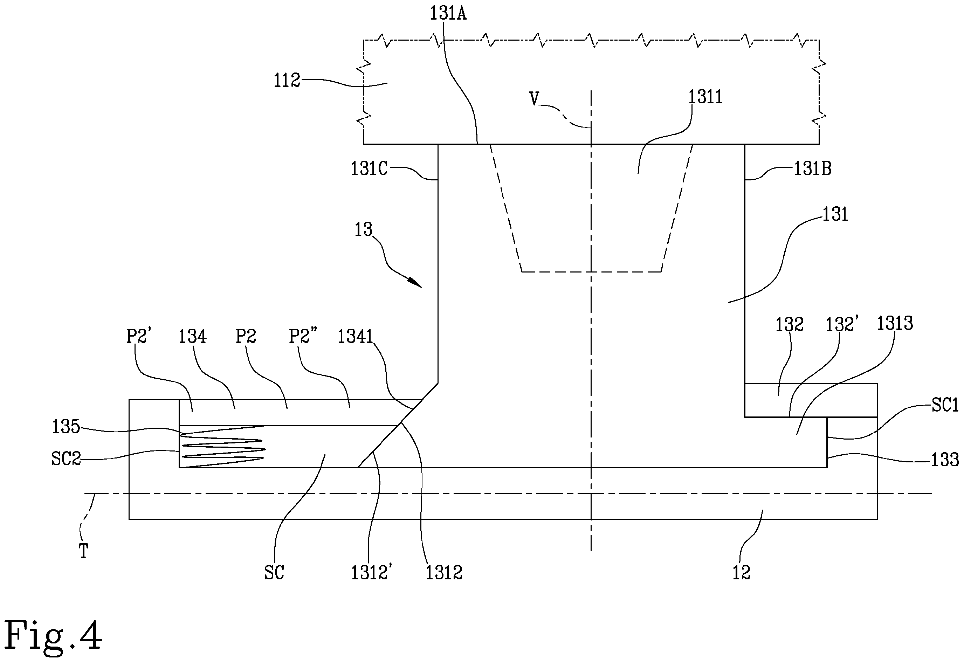

- Figure 4 schematically illustrates a second embodiment of a coupling system of the apparatus of Figure 1.

With reference to the accompanying drawings, the reference numeral 1 denotes an apparatus for performing mechanical operations on a component C. In particular, in a preferred embodiment, the apparatus is a grinding machine 1, configured to perform grinding operations on the component C.

The apparatus 1 comprises a base 12, the bottom of which is in contact with a supporting surface which the apparatus 1 rests on.

The base 12 is a block made from a first material. In an embodiment, the base 12 is supported on the supporting surface by one or more supporting feet. The supporting feet allow the base to deform to a minimum extent to allow it to adapt to the supporting surface.

The apparatus 1 comprises a workpiece holder assembly 10, configured to keep a grip on the component C during processing. The workpiece holder assembly is connected to the base 12. In particular, in an embodiment, the workpiece holder assembly 10 is fixedly connected to the base 12, whilst in other embodiments, it is movable relative to the base 12 so that its position can be adjusted. The workpiece holder assembly 10 comprises a locking element 101, configured to grip the component C. The locking element 101 is preferably rotatable about an axis of rotation A that is parallel with a longitudinal direction of extension L of the apparatus 1.

In an embodiment, the apparatus 1 comprises a tailstock. The tailstock is aligned with the locking element 101 along the axis of rotation A, to abut the component C on the opposite side of the locking element 101.

The apparatus 1 comprises a working unit 11, configured to perform the processes on the component C. The working unit 1 is movable relative to the base 12 along the longitudinal direction L. The working unit 1 is movable towards and away from the workpiece holder assembly 10 along the longitudinal direction L. This allows it to vary the working position relative to the component C, thus working on different longitudinal positions.

The working unit 11 is disposed laterally, along the transverse direction T, perpendicular to the longitudinal direction L and to the vertical direction V.

The working unit 11 comprises one or more working tools 111, configured to be interfaced directly with the component C and to effectively perform the operations on the component C. For example, but not necessarily, the one or more working tools (optionally) comprise a grinding wheel 111 rotating about a respective axis of rotation parallel with the axis of rotation A of the workpiece holder assembly 10.

The working unit 11 comprises a frame. The working unit comprises a slide block 112, which effectively slides inside a respective housing to guide the movement of the working unit 11 along the longitudinal direction L. The slide block 112 is not necessarily a distinct part separate from the frame of the working unit 11 but may also be a protuberance of the frame having a predetermined shape and defining a shape coupling in the respective housing.

The apparatus 1 comprises an actuating unit, configured to move the working unit 11 along the longitudinal direction L. The actuating unit may include electric motors, chain, belt and gear transmission units, reduction gear units and all the components needed to transmit the power to move the working unit 11. The apparatus 1 comprises a control unit, configured to receive configuration data, representing a design position of the working unit 11 or a design displacement of the working unit 11 over time. The control unit is programmed to generate command signals, based on the configuration data, to instruct the actuating unit to displace the working unit 11 according to the design displacement.

It should be noted that this invention is most advantageous in those cases where the slide block 112, that is, the part of the working unit 11 configured to be interfaced with the base 12, is made from a second material having a thermal expansion coefficient different from that of the first material.

The apparatus 1 comprises a coupling system 13. Preferably, the coupling system 13 is labile (that is, it has at least one degree of freedom of the unconstrained system, along which the system 13 is free to deform). The coupling system 13 is configured to allow the base 12 and the working unit 11 to be movably coupled to each other. In particular, the coupling system 13 is interposed between the slide block 112 of the working unit 11 and the base 12.

The coupling system 13 comprises a guiding bar 131. The guiding bar 131 is interposed between the slide block 112 of the working unit 11 and the base 12.

The guiding bar 131 comprises a guide groove 1311, configured to accommodate the slide block 112 as it moves along the longitudinal direction L. The cross section of the guide groove 1311 in a plane perpendicular to the longitudinal direction L may have any of a variety of shapes, for example, a trapezium, rectangle, square or dovetail shape. The guide groove 1311 is formed on a top surface 131A of the guiding bar 131. The guiding bar 1311 is made from the second material, that is to say, the same material as the slide block 112 is made from. This ensures that the slide block 112 does not lose its calibration setting in the groove 1311 on account of thermal expansion.

The guiding bar 131 is elongated along the longitudinal direction between a first longitudinal end 131' and a second longitudinal end 131".

The guiding bar 131 comprises a first protrusion 1313. The first protrusion is preferably a first transverse protrusion 1313. The first transverse protrusion 1313 protrudes laterally, along the transverse direction, from a first side 131B of the guiding bar 131 perpendicular to the transverse direction T. In an embodiment, the first transverse protrusion 1313 has, in a plane perpendicular to the longitudinal direction L, a cross section that defines a rectangle or a square. In an embodiment, the first transverse protrusion 1313 has a height along the vertical direction V that is greater than its transverse dimension, so that it can better resist the flexural stress it might be subjected to.

The guiding bar 131 comprises a second protrusion 1312. The second protrusion is preferably a second transverse protrusion 1312. The second transverse protrusion 1312 protrudes laterally, along the transverse direction, from a second side 131C of the guiding bar 131 perpendicular to the transverse direction T and opposite the first side 131B. Thus, the second transverse protrusion 1312 protrudes along the longitudinal direction L in a sense V2 opposite of the sense V1 in which the first transverse protrusion 1313 protrudes. In an embodiment, the second transverse protrusion 1312 has, in a plane perpendicular to the longitudinal direction L, a cross section that defines a triangle or a trapezium. In an embodiment, the second transverse protrusion 1312 has a height along the vertical direction V that is greater than its transverse dimension, so that it can better resist the flexural stress it might be subjected to.

In an embodiment, the second transverse protrusion 1312 comprises a sloping surface 1312'.

The coupling system 13 comprises a locking element 136, configured to lock the guiding bar 131 to the base 12. In particular, the locking element 36 is disposed, along the longitudinal direction L, at an intermediate position between the first longitudinal end 131' and the second longitudinal end 131". Preferably, the first and the second longitudinal end 131', 131" are free to move relative to the base 12 along the longitudinal direction. That way, thanks to the central locking element 36 and the two free ends, the guide can expand or contract without affecting the movement of the working unit 11.

The coupling system 13 is configured to lock the guiding bar along the transverse direction T. The coupling system 13 is configured to lock the guiding bar along the vertical direction V.

In particular, in a first embodiment, the coupling system 13 comprises a reference strip 133. The reference strip 133 extends along the longitudinal direction L parallel to the guiding bar 131, between a first end 133A and a second end 133B.

The reference strip 133 is fixed to the base 12. The reference strip 133 is made from the same material as the base 12. The reference strip 133 comprises an abutment surface 133' which abuts against the first transverse protrusion 1313 of the guiding bar 131. In particular, a surface perpendicular to the transverse direction T of the first transverse protrusion 1313 is abutted against the abutment surface 133'. Thus, the reference strip 133 acts as a stop for positioning the guiding bar 131.

In this regard, it is noted that in an alternative embodiment, there is no reference strip 133 distinct from the base 12. In this embodiment, the base 12 comprises a groove SC. The groove SC comprises a first abutment surface SC1 which has the same function has the abutment surface 133' of the reference strip 133, that is to say, to abut against the surface perpendicular to the transverse direction T of the first transverse protrusion 1313.

During assembly, therefore, the reference strip 133 is locked to the base 12 before positioning the guiding bar 131 which, only after that, is positioned in abutment against the reference strip 133. In the alternative embodiment, the first step involves positioning the guiding bar in the groove SC, in contact with the first abutment surface SC1.

The coupling system 13 comprises one or more plugs 132. The one or more plugs 132 are configured to prevent the guiding bar from moving vertically. The one or more plugs 132 are connected to a surface of the reference strip 133 perpendicular to the vertical direction V. The one or more plugs 132 protrude longitudinally from the abutment surface 133' of the reference strip 133 in the second sense V2. The one or more plugs 132 comprise a respective vertical abutment surface 132', configured to abut against a surface perpendicular to the vertical direction V of the first transverse protrusion 1313.

During assembly, therefore, after positioning the guiding bar 131 against the reference strip 133 or against the inside of the groove SC, the one or more plugs 132 are also positioned.

The coupling system 13 also comprises an abutment on the side opposite the side where the reference strip 133 or the first abutment surface SC1 of the groove is positioned.

For this purpose, the coupling system 13 comprises one or more abutment wedges 134. It should be noted that if there are two or more abutment wedges 134, these are (uniformly) spaced along the longitudinal direction L along the full length of the guiding bar 131.

Each abutment wedge 134 comprises a respective abutment surface 1341, facing towards the guiding bar 131. It is noted that the abutment surface 1341 is a sloping surface that is configured to come into contact with the sloping surface 1312' of the second transverse protrusion 1312 of the guiding bar 131. The slope of the abutment surface 1341 and the slope of the sloping surface 1312' of the second transverse protrusion 1312 complement each other so that one slides over the other responsive to a displacement (and/or expansion) of the guiding bar along the transverse direction T. In an embodiment, the wedge 134 comprises a first portion P1, which extends vertically from the base 12, and a second portion P2 (transverse portion, or bending arm of the wedge), which extends along the transverse direction T until coming into contact with the second transverse protrusion 1312. The presence of the first portion P1 gives the second portion P2 (the transverse portion, or bending arm of the wedge) a greater bending capacity. Obviously, also imaginable is a solution with only the second portion P2, locked to the base 12 at a first end P2', distal to the guiding bar 131, and free at the second, opposite end P2", so as to be able to bend relative to the first end responsive to a displacement (and/or expansion) of the guiding bar 131 along the transverse direction T.

This embodiment allows keeping the guiding bar 131 in abutment against the reference strip 133 or the groove SC at all times, since the wedge has inherent elasticity, which after being bent to compensate for the expansion of the guiding bar 131, allows it to return to its position when the guiding bar is contracted.

In the embodiment with the groove SC, the groove comprises a second abutment surface SC2, to which the transverse portion P2 of the wedge 134 is locked (by a pressed fit).

In some embodiments, if the elasticity of the material is insufficient to adequately return the bending arm of the wedge P2 responsive to a contraction of the guiding bar 131, one or more springs 135 are provided to exert on the wedge a return force which applies to the sloping surface 1312' of the second transverse protrusion 1312 a force component that is oriented in the first sense V1 so as to keep the guiding bar 131 abutted against the reference strip 133.

It should be noted that the coupling system 13 may comprise a plurality of guiding bars 131, each equipped with a respective reference strip 133, plug 132 and wedge 134 according to one or more of the features described herein in relation to these components.

## Claims

1. An apparatus (1) for processing a component (C) through one or more operations, comprising:
- a workpiece holder assembly (10), elongated along a longitudinal axis (A) and including a locking element (101) configured to keep a grip on the component (C) during processing;
- a base (12), made from a first material, connected to the workpiece holder assembly (10) and configured to support the apparatus (1) on a supporting surface,
- a working unit (11) including a working tool (111), configured to come into contact with the component (C) to perform the one or more operations thereon, and a slide block (112), movably connected to the base (12), the working unit (11) being movable relative to the workpiece holder assembly (10) along a longitudinal direction (L) parallel with the longitudinal axis (A), wherein the slide block (112) is made from a second material, having a thermal expansion coefficient different from that of the first material,
**characterized in that** it comprises a coupling system (13), configured to allow coupling between the slide block (112) and the base (12) and including:
- a guiding bar (131), elongated along the longitudinal direction (L) between a first end and a second end and coupled to the slide block (112) which slides therein;
- a locking element, configured to lock the guiding bar (131) to the base (12) along the longitudinal direction (L),
wherein the locking element is disposed, along the longitudinal direction (L), between the first end and the second end of the guiding bar (131), and wherein the first and second ends of the guiding bar (131) are movable along the longitudinal direction (L) in such a way as to be freely deformable in response to a thermal variation.

2. The apparatus (1) according to claim 1, wherein the coupling system (13) comprises:
- a first abutment unit (133, 134) configured to prevent movement of the guiding bar (131) relative to the base (12) along a transverse direction (T), perpendicular to the longitudinal direction (L);
- a second abutment unit (132) configured to prevent movement of the guiding bar (131) relative to the base (12) along a vertical direction (V), perpendicular to the longitudinal direction (L) and to the transverse direction (T).

3. The apparatus (1) according to claim 2, wherein the first abutment unit (133, 134) comprises a reference strip (133), elongated along the longitudinal direction (L) between a respective first and second end and made from the first material, the reference strip (133) being locked to the base (12) and defining a step on which it abuts the guiding bar (131), along the transverse direction (T) in a first sense (V1).

4. The apparatus (1) according to claim 2 or 3, wherein the second abutment unit (132) comprises one or more plugs (132), disposed, along the vertical direction (V) and relative to the reference strip (133), on the opposite side of the base (12), and wherein the guiding bar (131) comprises a first transverse protrusion (1313), the plurality of plugs (132) abutting the protrusion (1313) vertically to prevent the guiding bar (131) from being lifted relative to the base (12).

5. The apparatus (1) according to claim 3, wherein the first abutment unit (133, 134) comprises one or more abutment wedges (134), each including a respective sloping abutment surface (1341) and each disposed, relative to the transverse direction (T), on the opposite side of the reference strip (133), and wherein the guiding bar (131) comprises a second transverse protrusion, disposed on the opposite side of the first transverse protrusion (1313) and including a sloping surface (1312), the sloping abutment surfaces (1341) of the abutment wedges (134) being in contact with the second transverse protrusion to prevent movement of the guiding bar (131) along the vertical direction (V) and/or along the transverse direction (T) in a second sense (V2).

6. The apparatus (1) according to claim 5, wherein the one or more abutment wedges (134) are flexible, configured to bend and to compensate for thermal expansion along the transverse direction (T) due to a thermal variation, and wherein each abutment wedge (134) comprises a respective elastic element (135), configured to keep it in contact with the second transverse protrusion.

7. The apparatus (1) according to any one of the preceding claims, wherein the locking element is a pin, configured to lock the guiding bar (131) to the base (12) and wherein the locking element is disposed at a longitudinal position equidistant from the first and the second end of the guiding bar (131).

8. The apparatus (1) according to any one of the preceding claims, wherein the working unit (11) comprises an additional slide block, movably connected to the base (12), and wherein the apparatus (1) comprises an additional coupling system, configured to allow coupling between the additional slide block and the base and including:
- an additional guiding bar, elongated along the longitudinal direction between a respective first end and a respective second end and coupled to the additional slide block which slides therein;
- an additional locking element, configured to lock the additional guiding bar to the base along the longitudinal direction (L),
wherein the additional locking element is disposed, along the longitudinal direction (L), between the first end and the second end of the additional guiding bar, and wherein the first and the second end of the additional guiding bar are movable along the longitudinal direction (L) in such a way as to be freely deformable in response to a thermal variation.

9. The apparatus (1) according to claim 8, comprising a reference strip (133), configured to transversely abut the guiding bar (131), and an additional reference strip, configured to transversely abut the additional guiding bar.

10. The apparatus (1) according to claim 2, wherein the base (12) comprises a groove (SC), in which the guiding bar (131) is disposed, and wherein the first abutment unit (133, 134) is at least partly defined by the groove (SC) of the base (12) which is configured to transversely abut the guiding bar (131).

11. The apparatus according to any one of the preceding claims, wherein the base (12) is made from granite.

12. A method for processing a component (C) by performing one or more operations, the method including the following steps:
- keeping a grip on the component (C) by means of a workpiece holder assembly (10) elongated along a longitudinal axis (A) and including a locking element;
- supporting the apparatus (1) on a supporting surface by means of a base (12), made from a first material;
- performing the one or more operations by means of a working unit (11) made from a second material having a thermal expansion coefficient different from that of the first material;
- moving the working unit (11) longitudinally along a longitudinal direction (L) parallel with the longitudinal axis (A);
- moving the working unit (11) transversely along a transverse direction (T) perpendicular to the longitudinal direction (L),
wherein, in the step of moving longitudinally and/or in the step of moving transversely, a slide block (112) is coupled to the base (12) by a coupling system (13), including:
- a guiding bar (131), elongated along the longitudinal direction (L) between a first end and a second end and on which the slide block (112) slides;
- a locking element, which locks the guiding bar (131) to the base (12) along the longitudinal direction (L) and which is disposed, along the longitudinal direction (L), between the first and the second end of the guiding bar, wherein the method comprises a step of free thermal expansion along the longitudinal direction (L) by the first and the second end, in response to a thermal variation.

13. The method according to claim 12, comprising the following steps:
- abutting transversely, wherein a first abutment unit (133, 134) prevents movement of the guiding bar (131) relative to the base (12) along the transverse direction (T);
- abutting vertically, wherein a second abutment unit (132) prevents movement of the guiding bar (131) relative to the base (12) along the vertical direction (V), perpendicular to the longitudinal direction (L) and to the transverse direction (T).

14. The method according to claim 13, wherein in the step of abutting transversely, a reference strip (133) is made from the first material, locked to the base (12) and elongated along the longitudinal direction (L) between a respective first and second end, the reference strip (133) defining a step which abuts the guiding bar (131), along the transverse direction (T) in a first sense (V1).

15. A method for making an apparatus (1) for processing a component (C), the method comprising the following steps:
- providing a base (12) made from a first material;
- positioning a workpiece holder assembly (10), elongated along a longitudinal axis (A) and including a locking element, to keep a grip on the component (C) during processing;
- positioning a coupling system (13) on the base (12), including the following steps:
- providing a guiding bar (131), elongated along the longitudinal direction (L) between a first end and a second end;
- positioning a first abutment unit (133, 134);
- positioning the guiding bar (131) in contact with the first abutment unit (133, 134) along a transverse direction (T), perpendicular to the longitudinal axis (A);
- positioning a second abutment unit (132) to abut the guiding bar (131) along a vertical direction (V), perpendicular to the transverse direction (T) and to the longitudinal axis (L);
- locking the guiding bar (131) to the base (12) along a longitudinal direction (L), parallel with the longitudinal axis (A), by means of a locking element,
wherein the locking element is disposed, along the longitudinal direction (L), between the first end and the second end of the guiding bar (131), and wherein the first and second ends of the guiding bar (131) are movable along the longitudinal direction (L) in such a way as to be freely deformable in response to a thermal variation;
- coupling a slide block (112) of a working unit (11), which is configured to perform operations on a component (C), to the guiding bar (131) in such a way as to allow movement of the working unit (11) along the longitudinal direction (L).
